# EUROPEAN PATENT APPLICATION

(11) **EP 2 752 956 A1**
(43) Date of publication of application: **09.07.2014**
(21) Application number: 12827717.5
(22) Date of filing: 17.07.2012
(51) Int. Cl.: H02J 3/46, H01M 10/44, H01M 10/48, H02J 3/32, H02J 7/34

(54) **CELL CONTROL SYSTEM, CELL CONTROL DEVICE, CELL CONTROL METHOD, AND RECORDING MEDIUM**

(30) Priority: 02.09.2011 JP 2011191732
(71) Applicant: NEC Corporation, Tokyo 108-8001 (JP)
(72) Inventor: KUDO, Koji, Tokyo 108-8001 (JP); SAKUMA, Hisato, Tokyo 108-8001 (JP); YANO, Hitoshi, Tokyo 108-8001 (JP)
(74) Representative: Vossius & Partner
(86) International application number: PCT/JP2012/068066
(87) International publication number: WO 2013/031394

(57) **Abstract**

A battery control system for controlling operation of a part of a plurality of batteries connected to an electric power system includes: detection means that detects a battery characteristic of each of the plurality of batteries; selection means that selects, as candidates for an adjustment battery used to adjust power of the power system, batteries, each having a characteristic within a predetermined range of the battery characteristic, from the plurality of batteries, and selects the adjustment battery on the basis of a predetermined condition from the candidates for the adjustment battery; and control means that outputs, to the adjustment battery, an operation instruction instructing a charge or discharge operation.

## Description

### Technical Field

The present invention relates to a battery control system, a battery controller, a battery control method, and a recording medium. More particularly, the present invention relates to a battery control system, a battery controller, and a battery control method for controlling charge or discharge operation of a battery connected to an electric power system, and relates to a recording medium.

### Background Art

The output control of thermal power generation is mainly used as a method for regulating electric power supply and demand in the electric power system, and pumped storage hydroelectricity (pumping-up power generation) is properly combined with it.

However, as renewable power sources, as represented by photovoltaic power generation or wind power generation in which the electric power generation depends on weather, are incorporated as distributed power sources into electric power systems now and in the future, the concern arises that these distributed power sources may have an adverse impact on the balance between power supply and demand.

The concern arises that techniques of regulating power supply and demand that focus on thermal power generation may be inadequate for compensating for fluctuations in power supply and demand that are caused by these distributed power sources. As a result, new techniques for regulating power supply and demand are now considered imperative.

One proposal of a new technique for regulating power supply and demand is the utilization of distributed energy storage such as "storage batteries" or electric vehicles (EV), which are linked to the distribution network of an electric power system, that is expected to come into wide use. Energy storage is hereinbelow abbreviated and referred to as "ES."

Storage battery SCADA (Supervisory Control and Data Acquisition) that is installed, for example, in a distributing substation has been proposed as a system for controlling distributed ES that is linked to a distribution network. Storage battery SCADA implements regulation of power supply and demand through the use of various types of ES (such as LIB, NAS, NiH, and lead storage batteries) having different specifications and performance, such as storage batteries for regulating demand and storage batteries for consumers.

Patent Document 1 describes an electric power system controller that regulates power supply and demand through the use of consumer-side secondary batteries (ES) as well.

### Citation List

### Patent Literature

Patent Literature 1: JP2006-94648A

### Summary of Invention

### Problem to be Solved by the Invention

A large number of customer side storage batteries are managed individually by the respective customers, and hence there are variations in the characteristics of the storage batteries (ESs).

For this reason, when power is to be supplied by using a large number of customer side storage batteries (ESs), for example, in the case where power is supplied by using the battery SCADA or by using the power system controller that is described in Patent Literature 1, the operation of the customer side storage batteries is varied due to variation in the characteristics of the customer side storage batteries, and hence the accuracy in power supply and demand adjustment becomes low.

In the following, an example, in which the accuracy in the power supply and demand adjustment becomes low due to variation in the characteristics of customer side storage batteries, will be described.

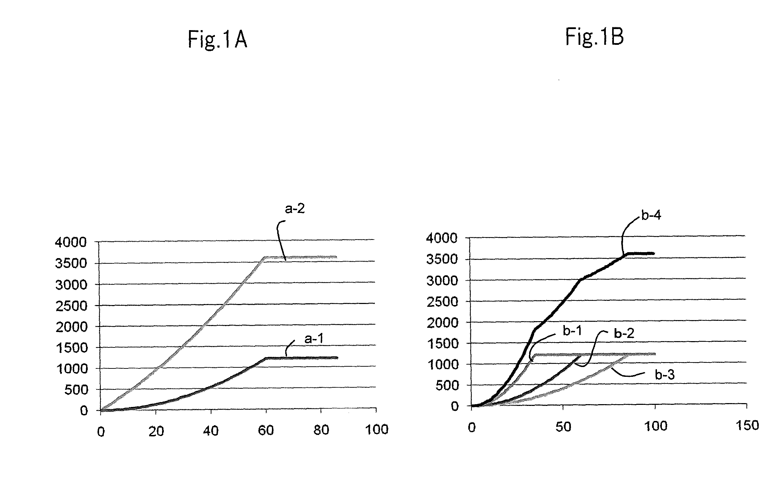

Figure 1A is a view showing a total value a-2 of output of three storage batteries each having the same discharge characteristic value a-1, the output being obtained when the three storage batteries are operated in the state in which the discharge start time is synchronized between the storage batteries. Figure 1B is a view showing a total value b-4 of output of three storage batteries that have different discharge characteristic values b-1, b-2 and b-3 respectively, the output being obtained when the three storage batteries are operated in the state in which the discharge start time is synchronized between the storage batteries.

In the case where the discharge characteristics of the storage batteries are the same as shown in Figure 1A, the rising curve of the total value a-2 of output of the three storage batteries, the maximum output, and the time when the maximum output is obtained can be easily recognized on the side of the control system. Therefore, in this case, the control system can accurately perform the power supply and demand adjustment by using the three storage batteries.

However, in the case where the characteristics of the storage batteries are varied as shown in Figure 1B, the rising curve of the total value b-4 of output of the storage batteries, the maximum output, and the time when the maximum output is obtained are difficult to be accurately recognized on the side of the control system. Therefore, in the case where a plurality of storage batteries, which have different characteristics respectively, are used, the control system cannot accurately perform power supply and demand adjustment, and hence the accuracy of the power supply and demand adjustment becomes low.

An object of the present invention is to provide a battery control system, a battery controller, and a battery control method a recording medium, each of which is able to reduce low accuracy of power supply and demand adjustment at the time when the power supply and demand adjustment is performed by using a plurality of batteries connected to an electric power system.

### Means for solving the Problem

A battery control system according to the present invention is a battery control system for controlling operation of a part of a plurality of batteries connected to an electric power system, the battery control system includes:
detection means that detects a battery characteristic of each of the plurality of batteries;
selection means that selects, as candidates for an adjustment battery used to adjust power of the electric power system, batteries, each having a characteristic within a predetermined range of the battery characteristic, from the plurality of batteries, and selects the adjustment battery on the basis of a predetermined condition from the candidates for the adjustment battery; and
control means that outputs, to the adjustment battery selected by the selection means, an operation instruction instructing a charge or discharge operation.

A battery controller according to the present invention is a battery controller for controlling operation of a battery connected to an electric power system, the battery controller includes:
communication means; and
control means that is configured, when the communication means receives a characteristic request requesting a characteristic of the battery, to cause the communication means to transmit the characteristic of the battery to the transmission source of the characteristic request, and is configured, when the communication means receives an operation instruction specifying a charge or discharge operation of the battery, to control the battery on the basis of the operation instruction.

A battery control method according to the present invention is a battery control method used in a battery control system for controlling operation of a part of a plurality of batteries connected to an electric power system, the battery control method includes:
detecting a battery characteristic of each of the plurality of batteries;
selecting, as candidates for an adjustment battery used to adjust power of the electric power system, batteries, each having a characteristic within a predetermined range of the battery characteristic, from the plurality of batteries, and selecting the adjustment battery on the basis of a predetermined condition from the candidates for the adjustment battery; and
outputting, to the adjustment battery, an operation instruction instructing a charge or discharge operation.

A battery control method according to the present invention is a battery control method used in a battery controller for controlling operation of a battery connected to an electric power system, the battery control method includes:
transmitting, when receiving a characteristic request requesting a characteristic of the battery, the characteristic of the battery to the transmission source of the characteristic request, and controlling, when receiving an operation instruction specifying a charge or discharge operation of the battery, the battery on the basis of the operation instruction.

A recording medium according to the present invention is a computer-readable recording medium with a program recorded thereon, the program causes a computer to execute:
a detection procedure to detect a battery characteristic of each of a plurality of batteries connected to an electric power system;
a selection procedure to select, as candidates for an adjustment battery used to adjust power of the electric power system, batteries, each having a characteristic within a predetermined range of the battery characteristic, from the plurality of batteries, and select the adjustment battery on the basis of a predetermined condition from the candidates for the adjustment battery; and
a control procedure to output, to the adjustment battery, an operation instruction instructing a charge or discharge operation.

A recording medium according to the present invention is a computer-readable recording medium with a program recorded thereon, the program causes a computer to execute the following procedure:
when receiving a characteristic request requesting a characteristic of a battery connected to a power system, to transmit the characteristic of the battery to the transmission source of the characteristic request, and when receiving an operation instruction specifying a charge or discharge operation of the battery, to control the battery on the basis of the operation instruction.

### Effect of Invention

According to the present invention, the power of an electric power system is adjusted by controlling charge or discharge operation of batteries each having a characteristic within a predetermined battery characteristic range. Thereby, it is possible to reduce low accuracy in power supply and demand adjustment.

### Brief Description of Drawings

Figure 1A is a view for explaining an example in which the accuracy of power supply and demand adjustment becomes low due to variations in the characteristics of the batteries.
Figure 1B is a view for explaining an example in which the accuracy of power supply and demand adjustment bocomes low due to variations in the characteristics of the batteries.
Figure 2 is a view showing a power control system adopting a battery control system according to a first exemplary embodiment of the present invention.
Figure 3 is a block diagram showing an example of ES 5a.
Figure 4 is a view showing examples of total demand curve X and smoothing target values Y in an entire distribution network.
Figure 5 is a flow chart for explaining operation of DEMS 7.
Figure 6 is a flow chart for explaining operation of supply side battery system 5 at the time of receiving a characteristic request from DEMS 7.
Figure 7 is a flow chart for explaining operation of supply side battery system 5 at the time of receiving an operation instruction from DEMS 7.
Figure 8 is a flow chart for explaining operation of supply side battery system 5 at the time of receiving an operation stop instruction from DEMS 7.
Figure 9 is a view showing a battery control system that is configured by information collection section 7b, selection section 7e, and instruction control section 7f.
Figure 10 is a flow chart for explaining operation of the battery control system shown in Figure 9.
Figure 11 is a view showing a power control system adopting a battery control system according to a second exemplary embodiment of the present invention.

### Mode for Carrying Out the Invention

In the following, exemplary embodiments according to the present invention will be described with reference to the accompanying drawings.

### (First exemplary embodiment)

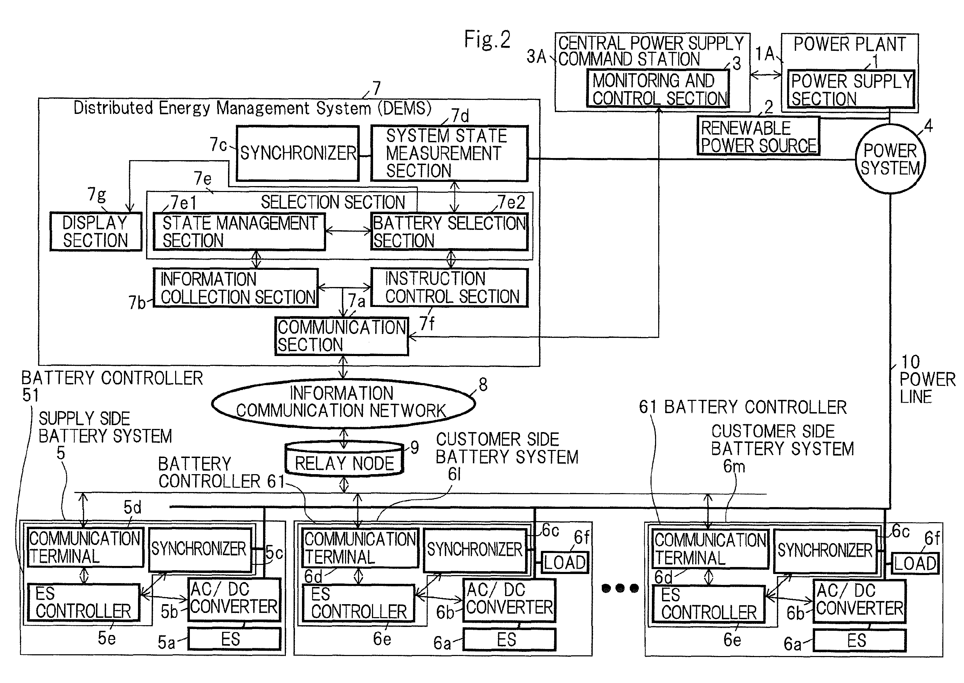

Figure 2 is a view showing a power control system that adopts a battery control system according to a first exemplary embodiment of the present invention.

In Figure 2, the power control system includes power supply section 1, renewable power source 2, monitoring and control section 3, electric power system 4, supply side battery system 5, customer side battery systems 61 to 6m (m is an integer of 2 or more), DEMS (Distributed Energy Management System) 7, communication network 8, and relay node 9.

Power supply section 1 is a generator, such as a thermal power generator that is provided in power plant 1A. Power supply section 1 outputs electric power that is generated in power plant 1A.

Renewable power source 2 is, for example, a solar power generator. It should be noted that renewable power source 2 is not limited to a solar power generator and can be suitably changed. For example, renewable power source 2 may be a wind power generator, and may be a hydroelectric generator (including a small hydroelectric generator which generates power of 1000 kW or less) and a geothermal generator. Also, renewable power source 2 may be a power source in which these generators are used in a mixed form. Further, renewable power source 2 may be provided in supply side battery system 5 or customer side battery systems 61 to 6m, so as to be connected to power line 10.

Monitoring and control section 3 is provided in central power supply command station 3A. Monitoring and control section 3 performs communication with DEMS 7. It should be noted that a communication line, which is used to send an instruction from central power supply command station 3A to power plant 1A, is present between central power supply command station 3A and power plant 1A.

Electric power system 4 is a system for supplying power to the customer side, and includes transformers, and the like, in which the voltage of power that is generated in power supply section 1 and the voltage of power that is generated in renewable power source 2 are respectively converted to a predetermined voltage so that the power having the predetermined voltage is supplied to power line 10. It should be noted that power plant 1A, renewable power source 2, and power line 10 are generally included in electric power system 4, but in Figure 2, electric power system 4, power plant 1A, renewable power source 2, and power line 10 are independently illustrated for simplicity of explanation.

Supply side battery system 5 is managed by the power supply side (for example, electric power company) which manages power plant 1A and central power supply command station 3A.

Supply side battery system 5 includes ES 5a, AC/ DC converter 5b, synchronizer 5c, communication terminal 5d, and ES controller 5e. It should be noted that synchronizer 5c, communication terminal 5d, and ES controller 5e are included in battery controller 51.

ES 5a is, for example, a stationary battery or a secondary battery in an electric vehicle.

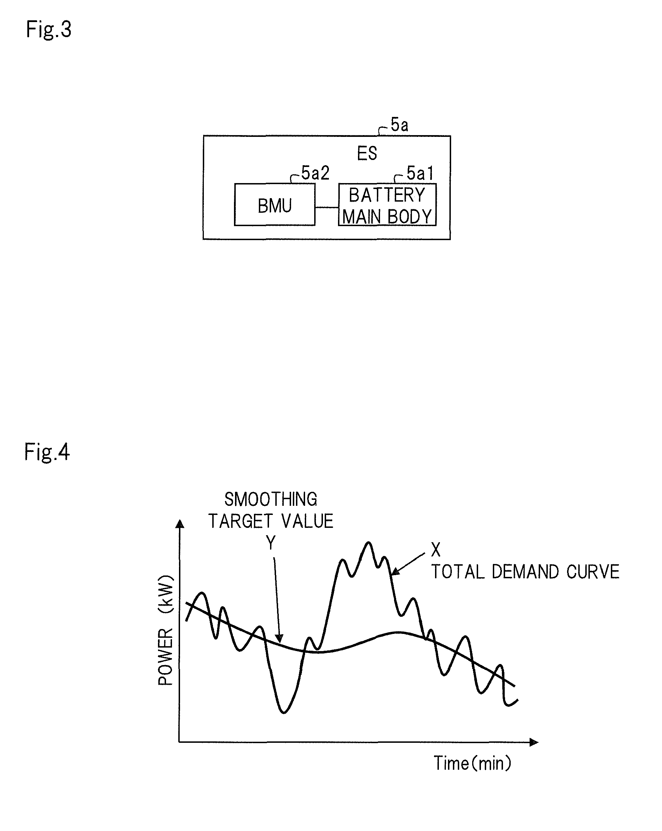

Figure 3 is a block diagram showing an example of ES 5a.

In Figure 3, ES 5a includes battery main body 5a1, and BMU (Battery Management Unit) 5a2 for controlling operation (charge and discharge operation) of battery main body 5a1.

BMU 5a2 recognizes the characteristics of battery main body 5a1, that is, the characteristics of ES 5a.

In the present exemplary embodiment, BMU 5a2 recognizes, as the characteristics of ES 5a, the following characteristics:
(1) remaining capacity of ES 5a,
(2) remaining empty capacity of ES 5a,
(3) SOC (State of Charge) of ES 5a,
(4) charge and discharge output of ES 5a (rated charge and discharge output of ES 5a),
(5) charge and discharge delay time (time period from a time, when ES 5a receives an operation instruction that instructs a charge or discharge operation, to a time when ES 5a starts carrying out the operation that corresponds to the operation instruction, and in the present exemplary embodiment, the time period from the time when ES 5a receives the operation instruction to the time when ES 5a starts generating a target output that is indicated by the operation instruction), and
(6) longest charge and discharge duration period (longest charge and discharge duration period for which the charge or discharge output keeps).

It should be noted that the characteristics of ES 5a that is recognized by BMU 5a2 are not limited to those described above and can be suitably changed. For example, BMU 5a2 may recognize grasp the following characteristics as required:
(7) SOC allowable values of ES 5a (upper and lower limits corresponding to deterioration, and the like, and a forbidden range, and the like, which is an SOC range in case of severe deterioration), and
(8) voltage at the connection point between ES 5a and electric power system 4.

Further, BMU 5a2 stores an ID which is identification information of ES 5a.

It should be noted that battery controller 51 may include the function of recognizing characteristics (1) to (8) of ES 5a.

When ES 5a is charged, AC/ DC converter 5b shown in Figure 2 converts AC voltage, which is provided from power line 10, into DC voltage, and supplies the DC voltage to ES 5a. Further, when ES 5a is discharged, AC/ DC converter 5b converts DC voltage, which is provided from ES 5a, into AC voltage, and supplies the AC voltage to power line 10.

Synchronizer 5c outputs time information for synchronization. In the present exemplary embodiment, synchronizer 5c outputs the time information received from a GPS (Global Positioning System) by using a GPS receiver (not shown).

Communication terminal 5d can be generally referred to as communication means.

Communication terminal 5d performs communication with DEMS 7 via communication network 8 and relay node 9. Communication terminal 5d receives, from DEMS 7, for example, a characteristic request to request a characteristic of the ES, an operation instruction to instruct a charge or discharge operation, and an operation stop instruction to stop the operation that corresponds to the operation instruction, and also transmits the characteristics of ES 5a to DEMS 7.

ES controller 5e can be generally referred to as control means.

ES controller 5e controls ES 5a on the basis of an instruction that communication terminal 5d received from DEMS 7. For example, on the basis of an operation instruction from DEMS 7, ES controller 5e outputs, via AC/ DC converter 5b, a discharge instruction or a charge instruction to BMU 5a2 in ES 5a at a timing that is specified by the time information from synchronizer 5c.

Customer side battery systems 61 to 6m are managed by customers that consume power.

Each of customer side battery systems 61 to 6m includes ES 6a, AC/ DC converter 6b, synchronizer 6c, communication terminal 6d, ES controller 6e, and load 6f. It should be noted that synchronizer 6c, communication terminal 6d, and ES controller 6e are included in battery controller 61.

ES 6a, AC/ DC converter 6b, synchronizer 6c, communication terminal 6d, and ES controller 6e have the same functions as those of ES 5a, AC/ DC converter 5b, synchronizer 5c, communication terminal 5d, and ES controller 5e, respectively. Therefore, explanation about ES 6a, AC/ DC converter 6b, synchronizer 6c, communication terminal 6d, and ES controller 6e is omitted.

Load 6f is, for example, an electric apparatus that is possessed by the customer.

DEMS 7 can be generally referred to as a battery control system. DEMS 7 is provided, for example, in a distribution substation. It should be noted that the installation site of DEMS 7 is not limited to a distribution substation and can be suitably changed.

DEMS 7 includes communication section 7a, information collection section 7b, synchronizer 7c, system state measurement section 7d, selection section 7e, instruction control section 7f, and display section 7g. Selection section 7e includes state management section 7e1, and battery selection section 7e2.

Communication section 7a performs communication with each of communication terminal 5d and communication terminal 6d via communication network 8 and relay node 9.

Information collection section 7b can be generally referred to as detection means.

Information collection section 7b detects battery characteristics of each of ES 5a and ES 6a. In the present exemplary embodiment, information collection section 7b collects battery characteristics of each of ES 5a and ES 6a from each of supply side battery system 5 and customer side battery systems 61 to 6m at predetermined intervals, for example, at intervals of 5 seconds. It should be noted that the collection interval is not limited to 5 seconds and can be suitably changed. Further, information collection section 7b also collects an ID of each of ES 5a and ES 6a together with the battery characteristics of each of ES 5a and ES 6a.

Synchronizer 7c outputs time information for synchronization. In the present exemplary embodiment, synchronizer 7c outputs time information of the GPS that is received by using a GPS receiver (not shown).

System state measurement section 7d detects power characteristics of electric power system 4. The power characteristics include, for example, power flow, voltage, current, frequency, phase, the amount of reactive power, the amount of effective power, and the like. On the basis of the detection result of the power characteristics of electric power system 4, system state measurement section 7d estimates the total demand value of the entire distribution network including power line 10 at the time of detection of the power of electric power system 4, and connects the estimated results (total demand values) in time series to estimate the total demand curve of the entire distribution network including power line 10. Further, system state measurement section 7d adds, to the total demand value, time information outputted by synchronizer 7c at the time of estimation of the total demand value.

Selection section 7e can be generally referred to as selection means.

By using a battery characteristic range (hereinafter simply referred to as "battery characteristic range") used to select candidates for an adjustment battery that is used to adjust the power of electric power system 4, selection section 7e selects, from each of ES 5a and ES 6a, a battery (hereinafter referred to as "corresponding battery") having a characteristic belonging to the battery characteristic range. Further, on the basis of a predetermined condition, such as the required amount of power, selection section 7e selects, from the corresponding batteries, the adjustment battery used to adjust the power of electric power system 4.

It should be noted that the battery characteristic range used to select a corresponding battery is an example of the predetermined battery characteristic range. Further, the corresponding battery is an example of a candidate for the adjustment battery.

State management section 7e1 stores the collection result collected by information collection section 7b. In the present exemplary embodiment, state management section 7e1 updates the collection result collected by information collection section 7b with the latest collection result.

Battery selection section 7e2 stores smoothing target values of the total demand curve (hereinafter simply referred to as "smoothing target values"), and the battery characteristic range. It should be noted that the smoothing target value indicates a target value at each time.

Battery selection section 7e2 selects a battery (adjustment battery) which is used so that the total demand curve that is estimated by system state measurement section 7d will be made close to or coincident with the smoothing target values.

Figure 4 is a view showing an example of total demand curve X of the entire distribution network, the total demand curve X being estimated (grasped) by system state measurement section 7d through the detection of power of electric power system 4, and an example of smoothing target values Y.

As shown in Figure 4, it is seen that total demand curve X shows a complicated behavior due to a combination of factors such as random power demand of customers, and variations in power generated by renewable power sources 2, such as solar power generation plants and wind power generation plants, which are incorporated in electric power system 4.

In the present exemplary embodiment, when the total demand value that is estimated by system state measurement section 7d at a certain time is different from a smoothing target value at the certain time, battery selection section 7e2 selects corresponding batteries from each of ES 5a and ES 6a, and selects an adjustment battery from the corresponding batteries.

Instruction control section 7f can be generally referred to as control means.

When a plurality of adjustment batteries are present, instruction control section 7f outputs an operation instruction to instruct a charge or discharge operation from communication section 7a to the plurality of adjustment batteries. It should be noted that, when one adjustment battery is present, instruction control section 7f outputs the operation instruction from communication section 7a to the one adjustment battery.

Display section 7g can be generally referred to as display means.

Display section 7g performs various displays. Display section 7g displays, for example, the collection result, which is collected by information collection section 7b and which is stored in state management section 7e1. Further, display section 7g displays the battery characteristic range that is used to select the corresponding batteries (candidates for an adjustment battery), the corresponding batteries selected by using the battery characteristic range, and the adjustment battery selected from the corresponding batteries.

Next, operation will be described.

In the following, there will be described control (load fitting control) in which, in order to improve the frequency stability of electric power system 4, the total demand curve is smoothed by DEMS 7 so as to be close to or coincident with smoothing target values.

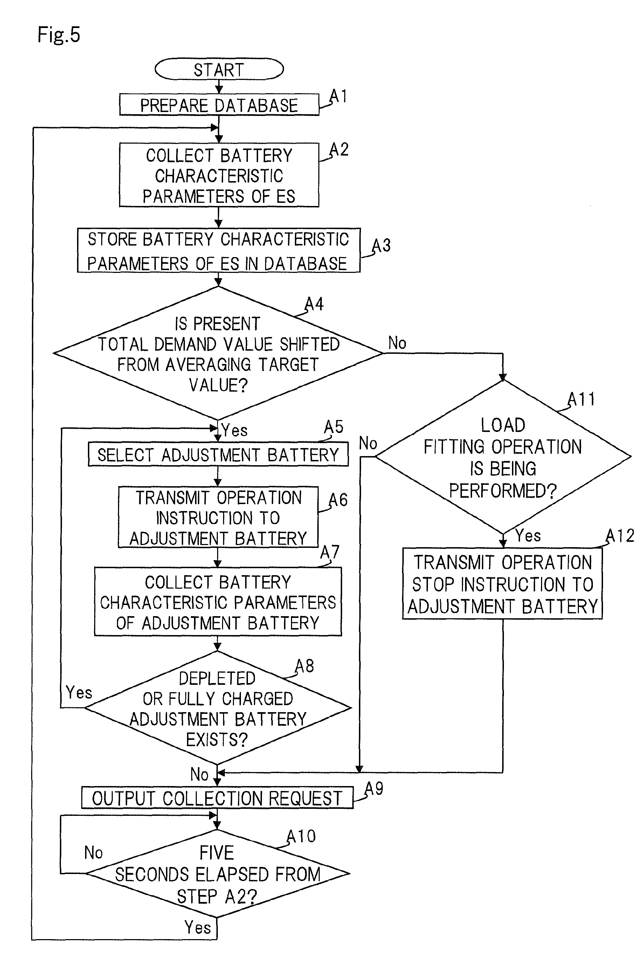

Figure 5 is a flow chart for explaining the operation of DEMS 7. It should be noted that, in the following, it is assumed that, each time system state measurement section 7d estimates a total demand value, system state measurement section 7d adds time information, which is received from synchronizer 7c, to the estimated total demand value, and then outputs, to battery selection section 7e2, the total demand value that is combined with the time information.

In DEMS 7, state management section 7e1 prepares a database for storing the collection result collected by information collection section 7b (step A1).

Subsequently, information collection section 7b collects battery characteristic parameters of each of ES 5a and ES 6a together with the ID of each of ES5a and ES6a via communication network 8 and relay node 9 (step A2).

For example, in step A2, information collection section 7b transmits a characteristic request from communication section 7a to supply side battery system 5 and to customer side battery systems 61 to 6m, and receives, via communication section 7a, the battery characteristic parameters and the ID of each of ES5a and ES6a, which are transmitted from supply side battery system 5 and customer side battery systems 61 to 6m in response to the characteristic request.

The parameters collected at this time are ES characteristics recognized by the BMU possessed by each of ES 5a and ES 6a or ES characteristics recognized by each of battery controllers 51 and 61. In the present exemplary embodiment, the following characteristics are collected:
(1) remaining capacity of ES,
(2) remaining empty capacity of ES,
(3) SOC,
(4) charge and discharge output,
(5) charge and discharge delay time, and
(6) longest charge and discharge duration.

Subsequently, information collection section 7b stores the collection result of battery characteristic parameters of each of ES 5a and ES 6a in the database in state management section 7e1 (step A3).

Subsequently, battery selection section 7e2 determines whether or not the present total demand value from system state measurement section 7d has been shifted from the smoothing target value at the present time (step A4).

When the total demand value from system state measurement section 7d has been shifted from the smoothing target value, battery selection section 7e2 selects, by using the database in state management section 7e1, a battery (adjustment battery) used for bringing the total demand curve close to or coincident with the smoothing target values (step A5).

For example, in step A5, battery selection section 7e2 first pays attention to charge and discharge delay time (5) among the above-described parameters (1) to (6). In the present exemplary embodiment, from ES 5a and ES 6a, battery selection section 7e2 selects, as first selection ESs, ESs each having a charge and discharge delay time (for example, a charge and discharge delay time of 8 to 10 seconds) possessed by a largest number of ESs.

Subsequently, in order to make each of the adjustment batteries perform operation of causing the rated charging power to coincide with the rated discharge power, battery selection section 7e2 sets the operation range of the ESs so that the SOC lower limit will be 20% and so that the SOC upper limit will be 80%, and then selects, as second selection ESs, ESs each having the SOC value of 50% ± 5% from the first selection ESs by referring to the data of SOC (3) just before the smoothing control of the total demand curve is started.

Subsequently, since the period of sending the operation instruction is set to 5 seconds in the present exemplary embodiment, battery selection section 7e2 selects, as corresponding batteries (candidates for an adjustment battery), ESs having the longest charge and discharge duration (6) of 5 seconds or more, from the second selection ESs selected in consideration of two parameters of the charge and discharge delay time and the SOC.

From the corresponding batteries, each of which is selected in this way and has the charge and discharge delay time of 8 to 10 seconds, the SOC value of 50% ± 5%, and the longest charge and discharge duration of 5 seconds or more, battery selection section 7e2 finally selects the adjustment battery in order to obtain target charge and discharge output, that is, in order to obtain charge and discharge output necessary for reducing the difference between the total demand curve and the smoothing target values.

In the present exemplary embodiment, battery selection section 7e2 selects the adjustment batteries from the corresponding batteries in order from the ES that provide the smallest charge and discharge output (4) (the smallest rated charge and discharge output). When the total of charge and discharge output of the adjustment batteries reaches the target charge and discharge output, battery selection section 7e2 ends the selection of adjustment battery.

It should be noted that each of the corresponding batteries is a battery (a candidate for the adjustment battery) having characteristics within the battery characteristic ranges respectively specified by the charge and discharge delay time of 8 to 10 seconds, the SOC value of 50% ± 5%, and the charge and discharge duration of 5 seconds or more.

Further, each of the adjustment batteries is a battery selected from the corresponding batteries (candidates for the adjustment battery) on the basis of the amount of power necessary for the power adjustment.

After selection of the adjustment batteries, battery selection section 7e2 outputs, to display section 7g, the battery characteristic ranges used for selecting the corresponding batteries, the selection result of the corresponding batteries, and the selection result of the adjustment batteries. When receiving the battery characteristic ranges, the selection result of the corresponding batteries, and the selection result of the adjustment batteries, display section 7g displays the battery characteristic ranges, the selection result of the corresponding batteries, and the selection result of the adjustment batteries.

Further, after selecting the adjustment batteries, battery selection section 7e2 outputs, to instruction control section 7f, the selection result of the adjustment batteries, and the difference obtained by subtracting the smoothing target value from the total demand value.

When receiving the selection result of the adjustment battery, and the difference obtained by subtracting the smoothing target value from the total demand value, instruction control section 7f outputs a discharge operation instruction to the adjustment battery at the time when the difference represents a positive value, and outputs a charging operation instruction to the adjustment battery at the time when the difference represents a negative value (step A6).

In the present exemplary embodiment, when a plurality of the adjustment batteries is present in step A6, instruction control section 7f outputs, to the plurality of adjustment batteries from communication section 7a, an operation instruction which at least specifies a common charge or discharge start timing and specifies that the output value of the adjustment batteries is equal to a rated charge or discharge output.

Subsequently, information collection section 7b collects battery characteristic parameters of each of the adjustment batteries together with the ID of each of the adjustment batteries via communication network 8 and relay node 9, and updates the database in state management section 7e1 by using the collection result (step A7).

It should be noted that, in step A7, information collection section 7b transmits a characteristic request to each of the adjustment batteries from communication section 7a, so as to receive, via communication section 7a, the battery characteristic parameters and ID of each of the adjustment batteries, the parameters and ID being transmitted in response to the characteristic request, and updates the database in state management section 7e1 by using the received result.

Subsequently, when the difference obtained by subtracting the smoothing target value from the total demand value represents a positive value, battery selection section 7e2 refers to the updated database in state management section 7e1, so as to determine whether or not, among the adjustment batteries, there is an adjustment battery showing that the remaining capacity of the ES is depleted, and on the other hand, when the difference represents a negative value, battery selection section 7e2 refers to the updated database in state management section 7e1, so as to determine whether or not, among the adjustment batteries, there is an adjustment battery that shows that the remaining empty capacity of the ES is fully charged (step A8).

When, in step A8, among the adjustment batteries, there is an adjustment battery showing that the remaining capacity is depleted or an adjustment battery showing that the remaining empty capacity is fully charged, battery selection section 7e2 returns the processing to step A5.

On the other hand, when, in step A8, among the adjustment batteries, there is not any adjustment battery showing that the remaining capacity is depleted or any adjustment battery showing that the remaining empty capacity is fully charged, battery selection section 7e2 outputs, to information collection section 7b, a collection request requesting collection of battery characteristic parameters of each of the ESs (step A9).

When receiving the collection request, information collection section 7b waits until 5 seconds elapse from the time of the previous execution of step A2 (step A10).

After a lapse of 5 seconds from the time of the previous execution of step A2, information collection section 7b returns the processing to step A2.

On the other hand, when battery selection section 7e2 determines in step A4 that the total demand value from system state measurement section 7d has not shifted from the smoothing target value, battery selection section 7e2 determines whether or not the operation instruction has been transmitted to the adjustment batteries, that is, the adjustment batteries are performing the load fitting operation (step A11).

When determining in step A11 that the adjustment batteries are performing the load fitting operation, battery selection section 7e2 determines that the load fitting operation has become unnecessary, and outputs, to the adjustment batteries, an operation stop instruction to stop the (charge or discharge) operation corresponding to the operation instruction (step A12). Then, battery selection section 7e2 executes step A9.

On the other hand, when determining in step A11 that the adjustment batteries are not performing the load fitting operation, battery selection section 7e2 executes step A9.

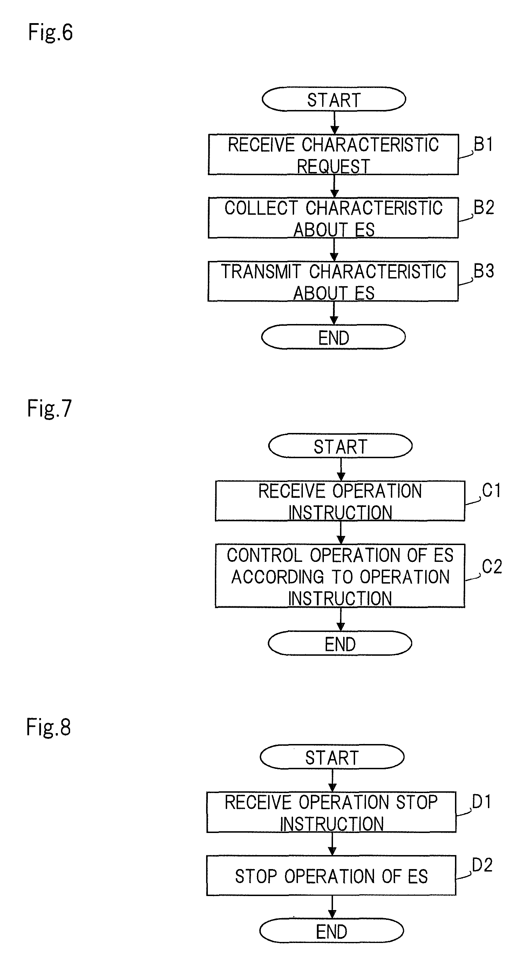

Figure 6 is a flow chart for explaining operation of supply side battery system 5 at the time of receiving a characteristic request from DEMS 7.

When receiving a characteristic request (step B1), communication terminal 5d outputs the characteristic request to ES controller 5e.

When receiving the characteristic request, ES controller 5e collects characteristics about ES 5a from BMU 5a2 in ES 5a via AC/ DC converter 5b (step B2).

In the present exemplary embodiment, as the characteristics about ES 5a, the following characteristics are used:
(1) remaining capacity of ES,
(2) remaining empty capacity of ES,
(3) SOC,
(4) charge and discharge output,
(5) charge and discharge delay time, and
(6) longest charge and discharge duration.

After collecting the characteristics of ES 5a, ES controller 5e transmits the characteristics of ES 5a to DEMS 7 from communication terminal 5d (step B3).

It should be noted that the operation of customer side battery systems 61 to 6m at the time of receiving the characteristic request from DEMS 7 is similar to the operation of supply side battery system 5 at the time of receiving the characteristic request from DEMS 7, and hence the explanation of the operation of customer side battery systems is omitted.

Figure 7 is a flow chart for explaining the operation of supply side battery system 5 at the time of receiving an operation instruction from DEMS 7.

When receiving an operation instruction (step C1), communication terminal 5d outputs the operation instruction to ES controller 5e.

ES controller 5e controls the operation of ES 5a according to the operation instruction (step C2).

In the present exemplary embodiment, in step C2, in the case where the charge start timing and the output value are specified by the operation instruction, when the time represented by the time information from synchronizer 5c becomes the charge start timing, ES controller 5e outputs, to BMU 5a2 in ES 5a via AC/ DC converter 5b, a charge instruction instructing execution of output operation corresponding to the output value specified by the operation instruction. BMU 5a2 makes battery main body 5a1 execute a charge operation according to the charge instruction.

On the other hand, in the case where the discharge start timing and the output value are specified by the operation instruction, when the time represented by the time information from synchronizer 5c becomes the discharge start timing, ES controller 5e outputs, to BMU 5a2 in ES 5a via AC/ DC converter 5b, a discharge instruction instructing execution of output operation corresponding to the output value specified by the operation instruction. BMU 5a2 makes battery main body 5a1 execute discharge operation according to the discharge instruction.

It should be noted that the operation of customer side battery systems 61 to 6m at the time of receiving the operation instruction from DEMS 7 is similar to the operation of supply side battery system 5 at the time of receiving the operation instruction from DEMS 7, and hence the explanation of the operation of customer side battery systems is omitted.

Figure 8 is a flow chart for explaining the operation of supply side battery system 5 at the time of receiving an operation stop instruction from DEMS 7.

When receiving an operation stop instruction (step D), communication terminal 5d outputs the operation stop instruction to ES controller 5e.

ES controller 5e stops the operation of ES 5a according to the operation stop instruction (step D2).

In the present exemplary embodiment, in step D2, ES controller 5e outputs the operation stop instruction to BMU 5a2 in ES 5a via AC/ DC converter 5b. BMU 5a2 stops the operation of battery main body 5a1 according to the operation stop instruction.

Next, the effects of the present exemplary embodiment will be described.

In the present exemplary embodiment, information collection section 7b detects a battery characteristic of each of ES 5a and ES 6a. Selection section 7e selects, as candidates (corresponding batteries) of an adjustment battery, batteries, each having a characteristic within a predetermined range of the battery characteristic, from each of ES 5a and ES 6a, and selects the adjustment battery from the candidates for the adjustment battery on the basis of a predetermined condition. Instruction control section 7f outputs, to the adjustment battery, an operation instruction instructing a charge or discharge operation.

For this reason, the adjustment batteries used for adjustment of power of a power system have similar battery characteristics, and hence it is possible to reduce variations in the battery characteristics between the adjustment batteries. Therefore, it is possible to reduce deterioration of accuracy in power supply and demand adjustment, the deterioration being caused by variations in the characteristics between batteries used for adjustment of power in the power system. Further, the plurality of adjustment batteries have similar battery characteristics, and hence the plurality of adjustment batteries can be virtually handled as one battery (battery cluster).

It should be noted that the above-described effects can be obtained in the battery control system configured by information collection section 7b, selection section 7e, and instruction control section 7f.

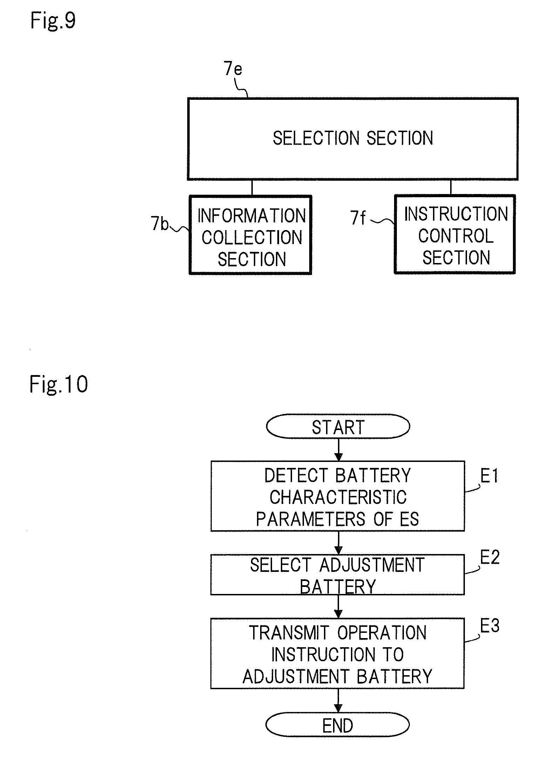

Figure 9 is a view showing a battery control system configured by information collection section 7b, selection section 7e, and instruction control section 7f. Figure 10 is a flow chart for explaining the operation of the battery control system shown in Figure 9. In the battery control system shown in Figure 9, information collection section 7b first detects a battery characteristic parameter (battery characteristic) of each of ES 5a and ES 6a (step E1). Subsequently, from each of ES 5a and ES 6a, selection section 7e selects, as candidates (corresponding batteries) of an adjustment battery, batteries each having a characteristic within a predetermined range of the battery characteristic, and selects the adjustment battery from the candidates for the adjustment battery on the basis of a predetermined condition (step E2). Subsequently, instruction control section 7f output, to the adjustment battery, an operation instruction instructing that a charge or discharge operation be carried out (step E3).

Further, in the present exemplary embodiment, information collection section 7b detects, as the characteristic of the battery, at least a battery charge or discharge characteristic. Further, the predetermined battery characteristic range specifies at least a range of the battery charge or discharge characteristic. For this reason, batteries having similar battery charge or discharge characteristics can be selected as the adjustment batteries, and hence it is possible to reduce deterioration of accuracy in power supply and demand adjustment, the deterioration being caused by variations in the charge or discharge characteristics.

It should be noted that the charge or discharge characteristic of a battery may be specified by at least one from among the following: the delay time of the battery from when an operation instruction is received by the battery to when the battery performs the operation corresponding to the operation instruction, the longest charge and discharge duration of the battery, the charge and discharge output of the battery, the remaining capacity of the battery, the remaining empty capacity of the battery, the SOC of the battery, and the voltage at the connection point between the battery and the power system.

Further, in the present exemplary embodiment, when a plurality of adjustment batteries are present, instruction control section 7f outputs, as an operation instruction, an operation instruction specifying at least a common charge start timing or a common discharge start timing. The adjustment batteries used for adjusting power of a power system have similar battery characteristics, and hence it is possible to reduce the deviation of charge start timing between the adjustment batteries or the deviation of common discharge start timing between the adjustment batteries.

Further, in the present exemplary embodiment, display section 7g displays the battery characteristic range used for selecting corresponding batteries (candidates for an adjustment battery), the result of selection of corresponding batteries, and the result of selection of the adjustment battery. For this reason, the user of the battery control system can confirm the operation state of the battery control system (the result of selection of corresponding batteries, and the result of selection of an adjustment battery). Therefore, when the result of selection of the corresponding batteries, and the result of selection of the adjustment battery are different from intended results, the user of the battery control system can adjust the result of selection of the corresponding batteries, and the result of selection of the adjustment battery by correcting the battery characteristic range.

Further, in battery controller 61 of the present exemplary embodiment, when communication terminal 6d receives a characteristic request, ES controller 6e causes communication terminal 6d to transmit the requested characteristic of ES 6a to the transmission source of the characteristic request, and when communication terminal 6d receives an operation instruction, ES controller 6e controls ES 6a on the basis of the operation instruction. For this reason, the operation of ES 6a can be controlled according to the control of DEMS 7.

### (Second exemplary embodiment)

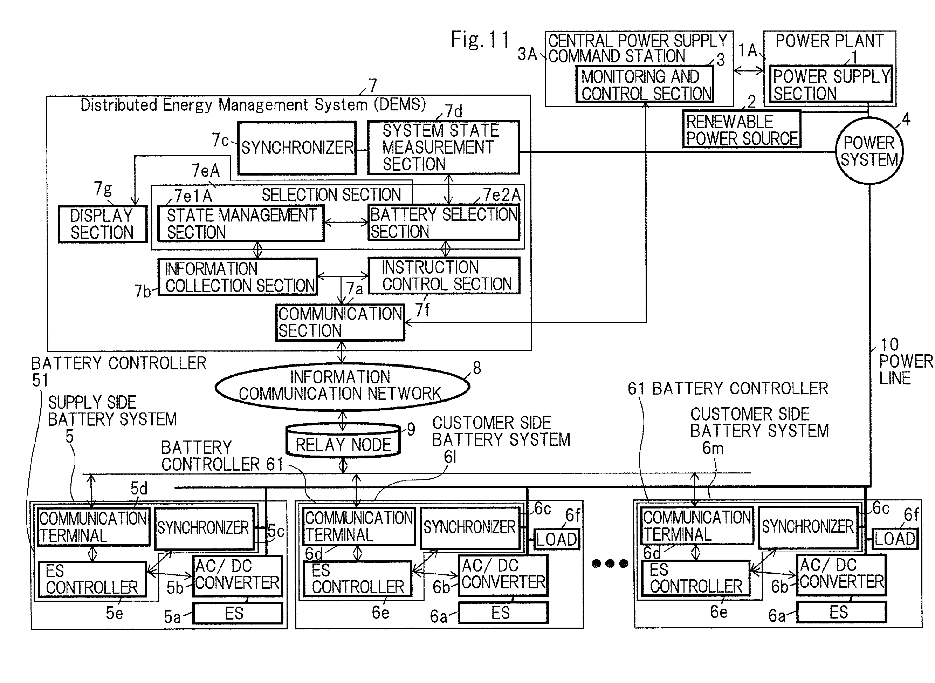

Figure 11 is a view showing a power control system adopting a battery control system of a second exemplary embodiment of the present invention. It should be noted that, in Figure 11, configurations that are the same as those shown in Figure 2 are denoted by the same reference numerals and characters. In the following, the power control system shown in Figure 11 will be described focusing on points different from the power control system shown in Figure 2.

In the power control system shown in Figure 11, the BMU of each of ES5a and ES 6a, or each of battery controllers 51 and 61 further recognizes, as the characteristics of each of the ESs, the full charge capacity (9) and the depth of discharge (10) of each of the ESs. It should be noted that the full charge capacity (9) and the depth of discharge (10) of each of the ESs are changed according to deterioration of each of the ESs. Also, in response to a characteristic request, each of ES 5a and ES 6a further transmits, to DEMS 7, the full charge capacity (9) and the depth of discharge (10) of each of the ESs.

Further, in the power control system shown in Figure 11, selection section 7eA is used instead of selection section 7e in the first exemplary embodiment shown in Figure 2, and state management section 7e1A is used instead of state management section 7e1, and battery selection section 7e2A is used instead of battery selection section 7e2.

In addition to the database (hereinafter referred to as "first DB") possessed by state management section 7e1, state management section 7e1A includes a database (hereinafter referred to as "second DB") for storing the characteristics first collected by information collection section 7b from each of ES 5a and ES 6a.

Battery selection section 7e2A stores the smoothing target value and the battery characteristic range similarly to battery selection section 7e2.

When the total demand estimated at a certain time by system state measurement section 7d is different from a smoothing target value at the certain time, battery selection section 7e2A compares, for each of the ESs, each of the full charge capacity (9) and the depth of discharge (10) of the ES which are stored in the first DB, with each of the full charge capacity (9) and the depth of discharge (10) of the ES which are stored in the second DB.

Battery selection section 7e2A specifies, as a deteriorated battery in a deteriorated state, the ES in which the difference in the full charge capacity (9) is equal to or larger than the first predetermined value, or in which the difference in the depth of discharge (10) is equal to or larger than the second predetermined value.

Further, from each of ES 5a and ES 6a other than the deteriorated battery, battery selection section 7e2A selects corresponding batteries similarly to battery selection section 7e2, and selects an adjustment battery from the corresponding batteries similarly to battery selection section 7e2.

In the present exemplary embodiment, on the basis of changes in the battery characteristic detected at a plurality of times for each of the ESs, selection section 7e specifies a deteriorated battery in a deteriorated state among the plurality of ESs, and selects corresponding batteries from the batteries of the plurality of ESs other than the deteriorated battery. For this reason, it is possible to prevent a deteriorated battery from being used as an adjustment battery, and thereby it is possible to reduce the deterioration of accuracy in power supply and demand adjustment, the deterioration being caused by using a deteriorated battery as an adjustment battery.

It should be noted that, in each of the above-described exemplary embodiments, supply side battery system 5 may be omitted, and a plurality of supply side battery systems 5 may exist.

Further, in each of the above-described exemplary embodiments, the battery characteristics (parameters) collected by information collection section 7b are not limited to those described above and can be suitably changed. For example, one or several of the characteristics (parameters) described above may be used, and for example, one or several of the following characteristics may be used: deterioration related parameters (life, temperature, and the like) of ES, allowable values (allowable V values) of upper and lower limits of voltage at the connection point of ES, minimum charge and discharge output of ES, location information of ES, the kind of ES, SOC upper and lower limits with respect to charging states (in fast charging state, rated charging state, and the like), the on/ off state of ES, maintenance information of ES (for example, information representing whether or not maintenance is performed periodically, information representing the time of future maintenance, and the like), the amount of effective charge and discharge power of ES, the amount of reactive power of ES, voltage of ES, and current of ES.

For example, in the case where information collection section 7b has collected the temperature of each of a plurality of ESs, battery selection section 7e2A specifies, as a deteriorated battery, the ES having a temperature higher than a reference temperature, and selects corresponding batteries from the batteries of the plurality of ESs other than the deteriorated battery.

Further, for example, in the case where information collection section 7b has collected the information representing the time of future maintenance of each of a plurality of ESs, battery selection section 7e2A specifies, as a deteriorated battery, a battery in the plurality of ESs, the battery being in the state in which the period from the present time to the time of future maintenance is shorter than a reference period. Then, battery selection section 7e2A selects corresponding batteries from batteries other than the deteriorated battery in the plurality of ESs.

Further, in each of the above-described exemplary embodiments, the battery characteristics for specifying the battery characteristic range are not limited to the three parameters (the charge and discharge delay time, the SOC, and the longest charge and discharge duration) described above, and can be suitably changed similarly to the battery characteristics collected by information collection section 7b.

Further, in each of the above-described exemplary embodiments, the BMU in the ES recognizes the longest charge and discharge duration, and transmits the longest charge and discharge duration to DEMS 7. However, for example, information collection section 7b in DEMS 7 may calculate the longest charge and discharge duration for each of the ESs by dividing the remaining capacity of the ES by the charge and discharge output of the ES. In this case, the BMU in the ES does not have to recognize the longest charge and discharge duration.

Further, in each of the above-described exemplary embodiments, among a plurality of ESs, battery selection section 7e2 or 7e2A may select a candidate for an adjustment battery from ESs, whose permission information for permitting the use of the ESs the battery selection section is notified about by the user (customer) of the ESs. In this case, it is possible to use, as the adjustment battery, the ES whose use is permitted by the user (customer) of the ES.

Further, in each of the above-described exemplary embodiments, among a plurality of ESs, battery selection section 7e2 or 7e2A may select a candidate for an adjustment battery from ESs, for whom permission information indicating, that use of a part of the charge and discharge capacity of the ESs are permitted, has been notified to the battery selection section. Further, when a plurality of adjustment batteries are present, instruction control section 7f may output, to each of the plurality of adjustment batteries, an operation instruction instructing a charge or discharge operation in a range of a part of the charge and discharge capacity of the adjustment battery, the use of the part of the charge and discharge capacity being permitted. In this case, it is possible to perform power supply and demand adjustment by using a part of the charge and discharge capacity of the ES, the use of the part of the charge and discharge capacity being permitted by the user (customer) of the ES.

Further, in each of the above-described exemplary embodiments, relay node 9 may be omitted. When relay node 9 is omitted, supply side battery system 5 and customer side battery systems 61 to 6m are connected to communication network 8.

It should be noted that DEMS 7 may be realized by a computer. In this case, the computer reads and executes a program recorded on a computer-readable recording medium such as a CD-ROM (Compact Disk Read Only Memory), so as to function as communication section 7a, information collection section 7b, synchronizer 7c, system state measurement section 7d, selection section 7e or 7eA, instruction control section 7f, and display section 7g. The recording medium is not limited to the CD-ROM and can be suitably changed.

Further, ES controller 5e or 6e may be realized by a computer. In this case, the computer reads and executes a program recorded on a computer-readable recording medium, so as to function as ES controller 5e or 6e.

In the above, the present invention has been described with reference to the exemplary embodiments, but the present invention is not limited to each of the exemplary embodiments. A configuration and details of the present invention may be modified in various ways within the scope of the present invention in a manner that a person skilled in the art can understand.

This application claims the benefit of priority from Japanese Patent Application No. 2011-191732 filed in Japan on September 2, 2011, the entire content of which is hereby incorporated by reference in the application and claims of the present application.

### Reference Signs List

- 1: Power supply section
- 1A: Power plant
- 2: Renewable power source
- 3: Monitoring and control section
- 3A: Central power supply command station
- 4: Power system
- 5: Supply side battery system
- 51: Battery controller
- 5a: ES
- 5a1: Battery main body
- 5a2: BMU
- 5b: AC/ DC converter
- 5c: Synchronizer
- 5d: Communication terminal
- 5e: ES controller
- 6: Customer side battery system
- 61: Battery controller
- 6a: ES
- 6b: AC/ DC converter
- 6c: Synchronizer
- 6d: Communication terminal
- 6e: ES controller
- 6f: Load
- 7: DEMS
- 7a: Communication section
- 7b: Information collection section
- 7c: Synchronizer
- 7d: System state measurement section
- 7e, 7eA: Selection section
- 7e1, 7e1A: State management section
- 7e2, 7e2A: Battery selection section
- 7f: Instruction control section
- 7g: Display section
- 8: Communication network
- 9: Relay node
- 10: Power line

## Claims

1. A battery control system for controlling operation of a part of a plurality of batteries connected to an electric power system, the battery control system comprising:
detection means that detects a battery characteristic of each of the plurality of batteries;
selection means that selects, as candidates for an adjustment battery used to adjust power of the electric power system, batteries, each having a characteristic within a predetermined range of the battery characteristic, from the plurality of batteries, and selects the adjustment battery on the basis of a predetermined condition from the candidates for the adjustment battery; and
control means that outputs, to the adjustment battery selected by said selection means, an operation instruction instructing a charge or discharge operation.

2. The battery control system according to claim 1, wherein
said detection means detects, as the battery characteristic, at least a charge or discharge characteristic of the battery, and
the predetermined range of the battery characteristic specifies at least a range of the battery charge or discharge characteristic.

3. The battery control system according to claim 2, wherein the battery charge or discharge characteristic is specified by at least one from among delay time that is defined as time from a time when the battery receives the operation instruction to a time when the battery performs operation corresponding to the operation instruction, longest charge and discharge duration of the battery, charge and discharge output of the battery, remaining capacity of the battery, remaining empty capacity of the battery, SOC of the battery, and voltage at the connection point between the battery and the electric power system.

4. The battery control system according to one of claims 1 to 3, wherein, when a plurality of adjustment batteries selected by said selection means exist, said control means outputs, as the operation instruction, an operation instruction that specifies at least one of a common charge start timing or a common discharge start timing.

5. The battery control system according to any one of claims 1 to 4, wherein, among the plurality of batteries, said selection means selects candidates for the adjustment battery from batteries, for whom permission information indicating that use of the batteries is permitted has been notified.

6. The battery control system according to one of claims 1 to 5, wherein
among the plurality of batteries, said selection means selects candidates for the adjustment battery from batteries, for whom permission information indicating, that use of a part of charge and discharge capacity of the batteries is permitted, has been notified, and
when a plurality of the adjustment batteries is present, said control means outputs, to the adjustment batteries, an operation instruction instructing charge or discharge operation within a range of the part of the charge and discharge capacity, the use of the part of the charge and discharge capacity being permitted.

7. The battery control system according to one of claims 1 to 6, wherein
said detection means detects the battery characteristic of each of the batteries a plurality of times, and
said selection means specifies, among the plurality of batteries, a deteriorated battery in a deteriorated state on the basis of a change in the battery characteristic detected a plurality of times for each of the batteries, and selects candidates for the adjustment battery from the plurality of batteries other than the deteriorated battery.

8. The battery control system according to one of claims 1 to 7, further comprising display means that displays the predetermined battery characteristic range, the selection result of the candidate for the adjustment battery, and the selection result of the adjustment battery.

9. A battery controller for controlling operation of a battery connected to an electric power system, the battery controller comprising:
communication means; and
control means that is configured, when said communication means receives a characteristic request requesting a characteristic of the battery, to cause said communication means to transmit the characteristic of the battery to the transmission source of the characteristic request, and is configured, when said communication means receives an operation instruction specifying a charge or discharge operation of the battery, to control the battery on the basis of the operation instruction.

10. A battery control method used in a battery control system for controlling operation of a part of a plurality of batteries connected to an electric power system, the battery control method comprising:
detecting a battery characteristic of each of the plurality of batteries;
selecting, as candidates for an adjustment battery used to adjust power of the electric power system, batteries, each having a characteristic within a predetermined range of the battery characteristic, from the plurality of batteries, and selecting the adjustment battery on the basis of a predetermined condition from the candidates for the adjustment battery; and
outputting, to the adjustment battery, an operation instruction instructing a charge or discharge operation.

11. A battery control method used in a battery controller for controlling operation of a battery connected to an electric power system, the battery control method comprising:
transmitting, when receiving a characteristic request requesting a characteristic of the battery, the characteristic of the battery to the transmission source of the characteristic request, and
controlling, when receiving an operation instruction specifying a charge or discharge operation of the battery, the battery on the basis of the operation instruction.

12. A computer-readable recording medium with a program recorded thereon, the program causing a computer to execute:
a detection procedure to detect a battery characteristic of each of a plurality of batteries connected to an electric power system;
a selection procedure to select, as candidates for an adjustment battery used to adjust power of the electric power system, batteries, each having a characteristic within a predetermined range of the battery characteristic, from the plurality of batteries, and select the adjustment battery on the basis of a predetermined condition from the candidates for the adjustment battery; and
a control procedure to output, to the adjustment battery, an operation instruction instructing a charge or discharge operation.

13. A computer-readable recording medium with a program recorded thereon, the program causing a computer to execute the following procedure:
when receiving a characteristic request requesting a characteristic of a battery connected to an electric power system, to transmit the characteristic of the battery to the transmission source of the characteristic request, and when receiving an operation instruction specifying a charge or discharge operation of the battery, to control the battery on the basis of the operation instruction.
